Europäisches Patentamt

European Patent Office

Office européen des brevets

(11) Veröffentlichungsnummer: **0 456 050 A1**

(19)

## (12) EUROPÄISCHE PATENTANMELDUNG

(21) Anmeldenummer: **91106754.4**

(22) Anmeldetag: **26.04.91**

(51) Int. Cl.⁵: **C09C 1/20, C25B 1/22, C25B 11/20, C25B 13/08**

(30) Priorität: **07.05.90 DE 4014482**

(43) Veröffentlichungstag der Anmeldung: **13.11.91 Patentblatt 91/46**

(84) Benannte Vertragsstaaten:
**AT BE DE ES GB IT NL**

(71) Anmelder: **BASF Aktiengesellschaft
Carl-Bosch-Strasse 38
W-6700 Ludwigshafen(DE)**

(72) Erfinder: **Steigerwald, Klaus, Dr.
Insurgentes Sur 605-11
03810 México, D.F.(MX)**
Erfinder: **Habermann, Wolfgang
Gonsenheimer Spiess 8
W-6500 Mainz 1(DE)**
Erfinder: **Gaedcke, Harald, Dr.
Hoffmannstrasse 166
W-7250 Leonberg(DE)**

(54) Verfahren zur Herstellung von Chromgelb- und Molybdatorange-Pigmenten.

(57) Verfahren zur Herstellung von Chromgelb-Molybdatorange-Pigmenten unter Wiederverwendung der eingesetzten Salpetersäure und Natronlauge, dadurch gekennzeichnet, daß man die bei der Pigmentherstellung anfallende Natriumnitratlösung in einer dreigeteilten Elektrolysezelle, deren Kathodenraum durch eine Kationenaustauschermembran und deren Anodenraum durch eine Anionenaustauschermembran von der natriumnitrathaltigen Mittelkammer separiert ist, elektrochemisch in Natronlauge und Salpetersäure spaltet, wobei die Salpetersäure zur Herstellung von Bleinitrat aus Bleioxid und die Natronlauge zur Fertigung von Natriumaluminat aus Aluminiumhydroxid sowie zur pH-Wert-Einstellung verwendet wird.

EP 0 456 050 A1

Rank Xerox (UK) Business Services

Die vorliegende Erfindung betrifft ein Verfahren zur Herstellung von Chromgelb- und Molybdatorange-Pigmenten unter Wiederverwendung der eingesetzten Salpetersäure und Natronlauge.

Die Herstellung von Chromgelb- und Molybdatorange-Pigmenten erfolgt, wie in der Patentliteratur mehrfach beschrieben, durch Umsetzung einer löslichen Bleiverbindung, im allgemeinen einer wäßrigen Bleinitratlösung, mit einer wäßrigen Lösung von Natriumchromat oder Natriumchromat-molybdat, die zur Regulierung der Kristallform und des Farbtons auch Natriumchlorid und Natriumsulfat enthalten kann. Nach der eigentlichen Fällung erfolgt zur Verbesserung der Licht- und Wetterechtheit in der Regel eine Beschichtung durch Abscheidung der Oxide bzw. Oxidhydrate von Aluminium und/oder Silizium und/oder Antimon aus den wäßrigen Lösungen ihrer Salze, bevor das so behandelte Pigment filtriert, getrocknet und gemahlen wird.

Die Bleinitratlösung wird hergestellt durch Auflösen von Bleioxid in Salpetersäure. Die Salpetersäure geht bei der anschließenden Fällung des Pigments quantitativ als Natriumnitrat im Abwasser verloren. Auf diese Weise gelangen im Durchschnitt pro 100 kg Pigment etwa 50 kg Natriumnitrat ins Abwasser.

Abgesehen von dem nicht unbeträchtlichen Kostenanteil der Salpetersäure an den Rohstoffkosten bringt die hohe Nitratbelastung im Abwasser zunehmend Probleme, da mit wachsender Nitratbelastung der Gewässer auch eine Erhöhung der Konzentration von Nitrat im Grundwasser und damit im Trinkwasser verbunden ist. Zur Vermeidung dieser Problematik sind deshalb zusätzliche Maßnahmen bei der Behandlung der Abwässer aus der Herstellung von Bleichromat-Molybdat-Pigmenten erforderlich.

Die Zusammensetzung des Abwassers schwankt je nach Farbton des hergestellten Pigments und der Art der Stabilisierung. Neben Natriumnitrat sind geringe Anteile Natriumchlorid und Natriumsulfat enthalten, die entweder aufgrund der Rezeptur als solche zugesetzt werden, durch Neutralisation entstehen oder sich bei der Ausscheidung der Oxidhydrate von Aluminium, Silizium oder Antimon bilden.

Aufgabe der vorliegenden Erfindung ist es, durch eine elektrochemische Spaltung des anfallenden Natriumnitrats, chloridfreie Salpetersäure und wäßrige Natronlauge in einer Konzentration und Qualität zurückzugewinnen, welche die Wiederverwendung bei der Herstellung der Chromgelb- und Molybdatorange-Pigmente ermöglicht.

Die Aufgabe wurde erfindungsgemäß dadurch gelöst, daß man die bei der Pigmentherstellung anfallende Natriumnitratlösung in einer dreigeteilten Elektrodialysezelle, deren Kathodenraum durch eine Kationenaustauschermembran und deren Anodenraum durch eine Anionenaustauschermembran von der natriumnitrathaltigen Mittelkammer separiert ist, elektrochemisch in Natronlauge und Salpetersäure spaltet, wobei die Salpetersäure zur Herstellung von Bleinitrat aus Bleioxid und die Natronlauge zur Fertigung von Natriumaluminat aus Aluminiumhydroxid sowie zur pH-Wert-Einstellung verwendet wird.

Zur Abtrennung des Chlors aus dem Anolyten befindet sich vor der Anode ein Separator, der verhindert, daß Chlor in den Anolyten zurückdiffundiert und die Anionenaustauschermembran schädigt. Als Separatoren werden dünne Kunststoff-, Ionenaustauscher- oder Keramikdiaphragmen verwendet.

Zusätzlich wird der Anolyt mit einem Inertgas begast, um Chlorspuren sicher zu vermeiden. Als Inertgas kommen bevorzugt Stickstoff oder Luft in Betracht.

Als Anionenaustauschermembran wird ein Styrol-Divinylbenzol-Copolymerisat mit einem Anteil von 4 bis 16, vorzugsweise 6 bis 10 Massen% Divinylbenzol verwendet. Die Polystyrolhauptkette kann zusätzlich über Polymethylen- oder Polyethylengruppen vernetzt sein. In der polymeren Matrix werden als ladungstragende Gruppen vom Typ $R-CH_2-N(R_3)_3^+$ bevorzugt stark, basische quervernetzte, $R-CH_2-N(CH_3)_3^+$- Gruppen verwendet.

Die Totalkapazität sollte in der polymeren Ionenaustauschermatrix mit den stark basischen, quervernetzten, quarternären Ammoniumgruppen 1,4 bis 1,6 mval/ml feuchter Ionenaustauschermembran betragen.

Die Blockierung der Permeation von Hydroniumionen wird durch den Anteil und die spezielle Vernetzung des Divinylbenzols erreicht. Die Divinylbenzolanteile sollten vollständig vernetzt sein, wobei durch Quervernetzung ein Vernetzungsgrad anzustreben ist, der dem doppelten prozentualen Anteil an Divinylbenzol entspricht.

Als Hydroniumionenblocker können außerdem in der Ionenaustauschermatrix mit den stark basischen quarternären Ammoniumgruppen niedermolekulare tertiäre oder sekundäre Amine verankert werden.

Zur Verbesserung der Selektivität können in die Oberfläche der Anionenaustauscherschicht oder Membran mit den stark basischen ladungstragenden quaternären Ammoniumgruppen zusätzlich stark basische quarternäre Ammoniumgruppen in hoher Konzentration eingebracht werden. Diese ladungstragenden Gruppen werden z.B. mit Chlormethylether in Gegenwart von Aluminiumchlorid sowie anschließender Umsetzung mit Trimethylamin erzeugt, wodurch eine weitere Vernetzung der polymeren Matrixoberfläche über die Methylenbrücken erfolgt und eine isopore Struktur der Ionenaustauscheroberfläche erreicht wird.

Als Stützgewebe für die polymere Ionenaustauschermatrix wird Polypropylen oder Polyethylen verwendet, wobei die Anbindung des Stützgewebes an die polymere Matrix mit Hilfe eines vernetzten Polyethylens erfolgt so daß eine hohe Temperaturbeständigkeit und Selektivität erreicht wird.

Als besonders günstig hat sich ein Verfahren zur Herstellung der Anionenaustauschermembran erwiesen, bei dem man eine Paste, die in einem Gemisch, das als wesentliche Komponenten Monomere mit funktionellen Gruppen, die zum Einführen von Ionenaustauschgruppen geeignet sind, Vernetzer und Polymerisationsinitiatoren hat, Polyethylen-Feinpulver mit einem Korndurchmesser von weniger als 10 $\mu$m enthält, auf ein tuchartiges Substrat aus Polyethylen aufbringt und polymerisiert, um dann die Ionenaustauschgruppen einzuführen.

Wichtig bei dieser Fertigung ist, daß man die Paste dadurch herstellt, daß man einem Gemisch, das als hauptsächliche Komponenten Monomere mit funktionellen Gruppen, die zum Einführen der Ionenaustauschgruppen geeignet sind, Vernetzer und Polymerisationsinitiatoren hat, kugelartiges Polyethylen-Feinpulver mit einem Korndurchmesser von weniger als 10 $\mu$m zusetzt. Nach der vorliegenden Erfindung ist nämlich durch die Verwendung von kugelartigem Polyethylen-Feinpulver mit einem Korndurchmesser von weniger als 10 $\mu$m ein Gemisch mit gewöhnlich 25 bis 200 Gew.-% möglich, bezogen auf ein bestimmtes Monomerengemisch. Das Gemisch kann man dann als viskose und fadenziehende Paste erhalten, die man auf ein als Verstärkungsmaterial dienendes tuchartiges Substrat aus Polyethylen gleichmäßig aufträgt.

Eine Paste mit Monomeren, die viel von solchem Polyethylen-Feinpulver enthält, wird gleichmäßig auf ein tuchartiges Substrat aus Polyethylen aufgetragen und polymerisiert. Dadurch bildet sich die Zusammensetzung mit der sogenannten "Meer-Insel-Struktur" mit dem Polyethylen-Feinpulver als Meer und den entstandenen Ionenaustauscherteilen als Inseln. Teile mit der Meer-Insel-Struktur, die sich durch viel Polyethylen-Feinpulver gebildet haben, zeigen eine gute Haftung, weil sie mit dem Substrat aus Polyethylen leicht thermisch verschmelzen.

Bevorzugt fertigt man solche Anionenaustauschermembranen wie folgt:

Zu 70 Gew.-Teilen Chlormethylstyrol, 15 Gew.-Teilen Divinylbenzol, 2 Gew.-Teilen Benzylperoxid und 2 Gew.-Teilen NBR-Kautschuk gab man 70 Gew.-Teilen Polyethylen-Feinpulver niederer Dichte (Flow Beads LE-108, Warenzeichen) mit einem Schmelzpunkt von 110 $^\circ$C und Kugelform mit einem mittleren Korndurchmesser von 7 $\mu$m. Die dabei entstehende Paste streicht man auf ein als Verstärkungsmaterial dienendes Gewebe mit 100 Maschen aus Polyethylen hoher Dichte, beschichtet das Ganze mit einer Tetoron-Folie (aus Polyester der Firma Teijin) als Abziehmaterial und polymerisiert 8 Stunden bei 105 $^\circ$C.

Das anfallende membranartige makromolekulare Polymer aminiert man in einer wäßrigen Lösung mit 10 Gew.-% Trimethylamin und 20 Gew.-% Aceton und erhält so eine besonders geeignete Anionenaustauschermembran mit einem elektrischen Widerstand von 6,2 $\Omega \cdot cm^2$.

Zum Schutz der Anionenaustauschermembran gegenüber Verschmutzungen und zur weiteren Verbesserung der Selektivität, kann auf der Anionenaustauscherseite, die sich in der Mittelkammer befindet, eine weitere Anionenaustauscherschicht oder Membran mit tertiären oder sekundären Aminogruppen aufgebracht werden. In dieser Membran werden bevorzugt, als tertiäre oder sekundäre Aminogruppen $R-CH_2-N-(CH_3)_2-$ oder $R-NH(CH_2CH_2NH)_n$-Gruppen verwendet.

Die elektrochemische Spaltung des Natriumnitrates erfolgt bei Temperaturen von $\geq$ + 20 und $\leq$ + 110 $^\circ$C, vorzugsweise bei Temperaturen von +30 $^\circ$C bis +90 $^\circ$C. Die Stromdichten müssen, um hohe Salpetersäure- und Natronlaugenkonzentration bei hohen Stromausbeuten zu erreichen mehr als 0,3 KA/$m^2$ betragen. Für die Umsetzung kommen Stromdichten von 0,3 bis 10 KA/$m^2$, vorzugsweise von 0,5 bis 3 KA/$m^2$ in Betracht.

Der pH-Wert in der natriumnitrathaltigen Mittelkammer sollte während der elektrochemischen Spaltung im Bereich von $\geq$4 und $\leq$10 vorzugsweise zwischen 6 und 8 liegen.

Als Elektrodenmaterialien werden perforierte Materialien verwendet, die z.B. in Form von Netzen, Lamellen, Ovalprofilstegen oder Rundprofilstegen ausgeführt sind.

Die Sauerstoffüberspannung der Anoden sollte in dem beanspruchten Stromdichtebereich weniger als 300 mV betragen, damit es im salpetersauren Anolyten nicht zur Bildung von Ozon und Perverbindungen kommt, so daß ein oxidativer Angriff der Anionenaustauschermembran vermieden wird.

Geeignete Anodenmaterialien mit geringen Sauerstoffüberspannungen für den salpetersäurehaltigen Anolyten sind, z.B. Titanträger mit einer Tantal und/oder Nioboberflächenschicht, deren Oberfläche mit elektrisch leitenden, nicht stöchiometrischen Mischoxiden aus Metallen der IV. bis VI. Nebengruppe des periodischen Systems der Elemente und Metallen oder Metalloxiden der Platingruppe oder Platinmetallverbindungen, wie z.B. Platinaten dotiert sind. Bevorzugt kommen Mischoxide des Tantal-Iridiums, Tantal-Platins und Tantal-Rhodiums sowie Platinate vom Typ $Li_{0,3}Pt_3O_4$ in Betracht. Zur Vergrößerung der Oberfläche sollten die Titanträger oberflächlich aufgerauht oder makroporös sein.

Als Kathoden werden Elektrodenmaterialien mit einer niedrigen Wasserstoffüberspannung eingesetzt umzusätzliche Spannungsverluste in der Elektrodialysezelle zu vermeiden. Geeignete Kathoden sind, z.B. Eisen- oder Nickelträger, die oberflächlich mit feinteiligem Kobalt, Nickel, Molybdän, Wolfram, Mangan, Raneymetallverbindungen des Nickels oder Kobalts oder Eisen- oder Nickel-Eisenlegierungen oder Kobalt-Eisenlegierungen mit 65 Gew.-% bis 90 Gew.-% Eisen beschichtet sind.

Bevorzugt verwendet man Kathoden, die bei kathodischer Belastung eine Wasserstoffüberspannung von ≦150 mV aufweisen.

Als Kationenaustauschermembranen werden bevorzugt Polymere auf Basis von perfluorierten Olefinen oder Copolymere aus Styrol und Divinylbenzol verwendet, die als ladungstragende Gruppen Sulfonsäure- und Carboxylgruppen oder nur Sulfonsäuregruppen enthalten. Bevorzugt werden Membranen verwendet, die nur Sulfonsäuregruppen enthalten, da sie wesentlich beständig gegenüber Verschmutzungen durch mehrwertige Kationen sind.

Zur Verminderung des Spannungsverlustes in der Mittelkammer der Elektrodialysezelle sollte der Abstand zwischen der Kationen- und Anionenaustauschermembran nicht mehr als 8 mm betragen. Als vorteilhaft hat sich ein Abstand von 1,5 bis 2,5 mm zwischen den Membranen erwiesen.

In der Mittelkammer können die Zulaufnatriumnitratkonzentrationen zwischen 0,5 Gew.-% und der Sättigungsgrenze liegen. Bevorzugt sind Natriumnitratgehalte von 5 Gew.-% bis zur Sättigungsgrenze.

Die Zulaufkonzentrationen für die Natronlauge im Katolytraum können 0,1 bis 15 Gew.-% vorzugsweise 2,5 bis 10 Gew.-% und die Ablaufkonzentrationen 15 bis 25 Gew.-% betragen.

Bei der Salpetersäure haben sich Zulaufkonzentrationen von 0,5 bis 12 Gew.-% vorzugsweise von 5 bis 10 Gew.-% als günstig erwiesen. Die Ablaufkonzentrationen sollten zwischen 15 und 25 Gew.-% liegen.

Zur Verbesserung der Effektivität der elektrochemischen Natriumnitratspaltung nutzt man die durch den ohmschen Spannungsverlust in der Elektrodialysezelle anfallende thermische Energie, durch Absenkung der Wasserdampfpartialdrücke im Anolyt- und Katolytgasraum, zur Aufkonzentrierung der Salpetersäure und Natronlauge aus. Die Absenkung der Wasserdampfpartialdrücke kann, z.B. dadurch erfolgen, daß man einen Teil des an der Anode bzw. Kathode entstehenden Gases vom Wasserdampf befreit und im Kreislauf führt. Bevorzugt erfolgt die Aufkonzentrierung in nachgeschalteten Vakuumeindampfern durch eine mehrstufige Eindampfung.

Die quantitativen und qualitativen Schwankungen der Salzgehalte im Abwasser bei Produktion von Chromgelb- und Molybdatorange-Pigmenten stören die Elektrodialyse nicht und ermöglichen die Verwendung der Elektrolyseprodukte Natronlauge und Salpetersäure für die Pigmentsynthese, wenn folgende Maßnahmen getroffen werden:

Es dürfen nur soviel sulfathaltige Rohstoffe eingesetzt werden, wie Sulfationen vor der Fällung zur Chromat-Sulfat- bzw. Chromat-Molybdat-Sulfat-Mischkristallbildung oder nach der Fällung zum Abbinden eines Bleiüberschusses benötigt werden.

Dies bedeutet, daß anstelle des üblicherweise eingesetzten Aluminiumsulfats Aluminiumnitratlösung, hergestellt aus Aluminiumhydroxid (Hydragillit) und zurückgewonnener Salpetersäure oder Natriumaluminatlösung hergestellt aus Aluminiumhydroxid und zurückgewonnener Natronlauge eingesetzt wird, wobei im letzten Fall zur Aufrechterhaltung eines bestimmten pH-Wertes parallel zur Natriumaluminatlösung gleichzeitig Salpetersäure zugegeben wird.

Damit wird in der Anodenkammer eine Salpetersäure erhalten, die Schwefelsäure nur in Spuren enthält und zur Herstellung von Bleinitratlösung aus Bleioxid verwendet werden kann. Die gegebenenfalls vorhandenen Spuren von Schwefelsäure verursachen eine Trübung durch die Bildung von Bleisulfat, die für die Pigmentherstellung nicht hinderlich ist.

Das nach der Herstellung in Suspension vorliegende Pigment wird über eine Filterpresse von der Mutterlauge getrennt, auf der Presse gewaschen und wie üblich aufgearbeitet. Nur das klare Filtrat der Mutterlauge, gegebenenfalls wenn im Behälter vorgewaschen wird, das Filtrat aus Mutterlauge und erster Waschung im Behälter, wird der Elektrolyse zugeführt. Dieses Filtrat enthält ca. 90 % aller löslichen Salze. Aus wirtschaftlichen Gründen wird das Filtratabwasser aus der nachfolgenden Waschung auf der Presse oder im Behälter nicht mehr behandelt, da weniger als 10 % der gesamten Salze enthalten sind. Die Elektrodialyse ist so zu führen, daß die in der Anodenkammer sich bildende Salpetersäure mindestens 10%ige ist, da sich sonst in der Praxis beim Auflösen von Bleioxid zu Bleinitrat schwerlösliche Bleinitrate bilden.

Die Lösung aus der Mittelkammer der Elektrodialysezelle, die in Abhängigkeit des Produktmixes, das hergestellt wird, Al in einer Konzentration < 10 mg/l, Molybdän von < 1 mg/l, Sb bis 10 mg/l sowie Spuren aller sonst eingesetzten Stabilisierungsmittel enthalten kann, wird zweckmäßigerweise zur Herstellung der Chromat- bzw. Chromat/Molybdat-Lösung eingesetzt.

Die Natronlauge, die im Katolyten entsteht, wird verwendet zur pH-Einstellung der Chromat/Molybdat-Lösung und/oder Aluminatbildung und/oder pH-Einstellung bei der Stabilisierung. Für alle pH-Einstellungen mit Säure wird Salpetersäure verwendet und keine Salzsäure, um die Chlorgasbildung bei der Elektrolyse möglichst klein zu halten.

EP 0 456 050 A1

Das erfindungsgemäße Verfahren eignet sich insbesondere zur Aufarbeitung von wäßrigen Natriumnitratlösungen unter Wiederverwendung der eingesetzten Salpetersäure und Natronlauge bei der Herstellung von Chromgelb- und Molybdatorange-Pigmenten. Die elektrochemische Spaltung in der dreigeteilten Elektrodialysezelle ist durch die Verwendung einer Kationenaustauschermembran mit Sulfonsäuregruppen und den Einsatz der Anionenaustauscherschicht oder Membran mit den tertiären oder sekundären Aminogruppen auf der Anionenaustauscherseite in der Mittelkammer weitgehend unempfindlich gegenüber anorganischen Verunreinigungen in der Natriumnitratlösung.

Beispiel 1

Eine dreigeteilte Elektrodialysezelle wird mit einer Anode und Kathode von je 1 dm$^2$ Elektrodenfläche bestückt. Als Anode wird ein Ovalprofilträger von 2,5 mm Einzelstegdurchmesser und 1 mm Stegabstand verwendet. Auf der Oberfläche des Titanträgers befindet sich eine durch Plasmabeschichtung aufgetragene Legierung, bestehend aus 40 Gew.-% Tantal, 58,5 Gew.-% Wolfram und 1,5 Gew.-% Eisen, die mit einem Tantal-Iridiummischoxid dotiert ist. Die Kathode hat die gleiche Form wie die Anode und besteht aus kohlenstoffarmen Eisen. Zur Verminderung der Wasserstoffüberspannung wurde mit Hilfe des Plasmabrenners auf die Eisenoberfläche eine Legierung aus 80 Gew.-% Eisen und 20 Gew.-% Nickel aufgetragen. Der Anodenraum, in dem die Salpetersäure erzeugt wird, ist durch eine Anionenaustauschermembran von der Mittelkammer, in der sich die Natriumnitratlösung befindet, separiert. Als Anionenaustauschermembran wird ein Styrol-Divinylbenzol-Copolymerisat mit 6 Massen% Divinylbenzol und quervernetzten quarternären Ammoniumgruppen vom Typ R-CH$_2$N(CH$_3$)$_3$$^+$ sowie einer vernetzten Polyethylenstützschicht verwendet. Der Gesamtvernetzungsgrad in dieser Membran beträgt etwa 12 %. Auf der Ionenaustauscherseite zur Mittelkammer befindet sich eine weitere Anionenaustauschermembran, die als ladungstragende Gruppen Aminogruppen vom Tpy RNH(CH$_2$CH$_2$NH)$_n$ enthält. Als Kationenaustauschermembran wird ein Polymer auf Basis perfluorierten Olefinen mit Sulfonsäuregruppen verwendet.

Der Abstand zwischen der Anionen- und Kationenaustauschermembran in der Mittelkammer beträgt 2,5 mm. Die Kathode liegt direkt auf der Kationenaustauschermembran auf, während die Anode durch einen grobmaschigen perfluorierten Polyethylenspacer und ein Diaphragma, bestehend aus einem perfluorierten sowie sulfonierten Polyolefin von der Anionenaustauschermembran separiert ist. Der Anoden- und Kathodenraum der Elektrodialysezelle besitzt je einen Naturumlauf für den Anolyten bzw. Katolyten. Die Mittelkammer wird im Kreislauf über ein Vorlagegefäß, das mit Natriumnitratlösung beschickt wird, von der natriumnitrathaltigen Lösung durchströmt.

Zu Beginn der Elektrodialyse wird im Anolytkreislauf eine 5 gew.-%ige Salpetersäure, im Katolytkreislauf eine 5 gew.-%ige Natronlauge und im Mittelkammerkreislauf eine Natriumnitratlösung, die bei der Produktion von Chromgelb anfällt, eingefüllt. Diese Mittelkammerlösung enthält etwa 0,55 Gew.-% Natrium, 9 ppm Calcium, 3 ppm Aluminium, 0,04 ppm Chrom, 2 ppm Blei, 1,45 Gew.-% Nitrat, 450 ppm Chlorid und 600 ppm Sulfat. Die Leitfähigkeit der Lösung beträgt etwa 15900 µS/cm.

Die Betriebsbedingungen während der Elektrodialyse haben folgendes Aussehen:
Stromdichte:     1 kA/m$^2$
Zellspannung:    5 bis 6 V
Temperatur:      65°C

Zusätzlich wird ein Teilstrom der Anolyt- und Katolytabgase durch Abkühlung vom Wasserdampf befreit und dem Kathoden- bzw. Anodenraum wieder zugeführt. Auf diese Weise wird die bei der Elektrodialyse anfallende überschüssige Wärmeenergie zur weiteren Aufkonzentrierung der Säure und Lauge ausgenutzt. Unter den beschriebenen Versuchsbedingungen werden in Abhängigkeit von der Stromausbeute folgende Säure- und Laugekonzentrationen im Batchbetrieb erreicht:

| Stromausbeute % | NaOH-Konzentration % | HNO$_3$-Konzentration % |
|---|---|---|
| 80 | 8 bis 12 | 10 bis 13 |
| 70 | 13 bis 16 | 15 bis 18 |
| 60 | 18 bis 22 | 20 bis 24 |

Nach der Elektrolyse beträgt der Leitwert des Mittalkammerelektrolyten ~ 500 µS·cm.

5

Der Natriumgehalt in der Schwefelsäure liegt bei ≦ 30 ppm und der Nitratgehalt in der Natronlauge < 2 ppm.

Die Elektrolyse kann auch kontinuierlich betrieben werden. Bei dieser Betriebsweise schaltet man 6 bis 8 Einzelheiten zu einer Kaskade zusammen. Die anfallende Salpetersäure wird zur Auflösung von Bleioxid und für alle erforderlichen pH-Einstellungen bei der Pigmentsynthese verwendet, während die Natronlauge bei der pH-Werteinstellung der Chromat/Molybdat-Lösung und der pH-Werteinstellung bei der Belegung des Pigmentes zum Einsatz kommt. Die Qualität der Salpetersäure und Natronlauge entspricht den Qualitätsforderungen, die für die Pigmentsynthese erforderlich sind, so daß typgerechte Farbstoffpigmente erhalten werden.

**Patentansprüche**

1. Verfahren zur Herstellung von Chromgelb-Molybdatorange-Pigmenten unter Wiederverwendung der eingesetzten Salpetersäure und Natronlauge, dadurch gekennzeichnet, daß man die bei der Pigmentherstellung anfallende Natriumnitratlösung in einer dreigeteilten Elektrolysezelle, deren Kathodenraum durch eine Kationenaustauschermembran und deren Anodenraum durch eine Anionenaustauschermembran von der natriumnitrathaltigen Mittelkammer separiert ist, elektrochemisch in Natronlauge und Salpetersäure spaltet, wobei die Salpetersäure zur Herstellung von Bleinitrat aus Bleioxid und die Natronlauge zur Fertigung von Natriumaluminat aus Aluminiumhydroxid sowie zur pH-Wert-Einstellung verwendet wird.

2. Verfahren nach Anspruch 1, dadurch gekennzeichnet, daß sich vor der Anode ein Separator befindet, der vermeidet, daß an der Anode entwickeltes Chlor in den Anolyten und an die Anionenaustauschermembran gelangt.

3. Verfahren nach Anspruch 1 und 2, dadurch gekennzeichnet, daß als Anionenaustauschermembran ein Styrol-Divinylbenzol-Copolymerisat mit sehr stark basischen quervernetzten quarternären Ammoniumgruppen vom Typ $R-CH_2-N(R)_3^+$ verwendet wird, die auf der Seite zur Mittelkammer eine weitere Anionenaustauscherschicht oder Membran mit tertiären oder sekundären Aminogruppen enthält.

4. Verfahren nach Anspruch 1 bis 3, dadurch gekennzeichnet, daß als Kationenaustauschermembran Polymere auf Basis von perfluorierten Olefinen oder Copolymeren aus Styrol und Divinylbenzol verwendet werden, die als ladungstragende Gruppen Sulfonsäuregruppen enthalten.

5. Verfahren nach Anspruch 1 bis 4, dadurch gekennzeichnet, daß als Anoden Materialien verwendet werden, die bei anodischer Belastung eine Sauerstoffüberspannung von ≦300 mV aufweisen.

6. Verfahren nach Anspruch 1 bis 5, dadurch gekennzeichnet, daß als Kathoden Materialien verwendet werden, die bei kathodischer Belastung eine Wasserstoffspannung von ≦150 mV aufweisen.

7. Verfahren nach Anspruch 1 bis 6, dadurch gekennzeichnet, daß der Abstand zwischen der Anionen- und Kationenaustauschermembran in der Mittelkammer ≦ 8 mm beträgt.

8. Verfahren nach Anspruch 1 bis 7, dadurch gekennzeichnet, daß perforierte Elektrodenmaterialien verwendet werden, wobei die Kathode direkt auf den Ionenaustauschermembran aufliegt, während die Anode sich direkt auf der Separatoroberfläche befindet.

9. Verfahren nach Anspruch 1 bis 8, dadurch gekennzeichnet, daß die Zulaufkonzentration für die Natronlauge im Katolytraum 0,5 bis 15 Gew.-% und die Ablaufkonzentration 16 bis 25 Gew.-% beträgt.

10. Verfahren nach Anspruch 1 bis 9, dadurch gekennzeichnet, daß die Zulaufkonzentration für die Salpetersäure im Anodenraum 0,5 bis 12 Gew.-% und die Ablaufkonzentration 15 bis 25 Gew.-% beträgt.

11. Verfahren nach Anspruch 1 bis 10, dadurch gekennzeichnet, daß der Anolytraum zusätzlich mit Inertgas begast wird, damit kein freies Chlor im Anolyten auftreten kann.

Europäisches
Patentamt

# EUROPÄISCHER RECHERCHENBERICHT

Nummer der Anmeldung

EP 91106754.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | US - A - 2 288 503 (WEAVER) * Seite 3, linke Spalte, Zeile 10; Seite 4, linke Spalte, Zeile 50 * -- | 1 | C 09 C 1/20 C 25 B 1/22 C 25 B 11/20 C 25 B 13/08 |
| A | DE - C1 - 3 806 214 (HEUBACH) * Zusammenfassung * -- | 1 | |
| A | EP - A1 - 0 221 751 (TOYO SODA) * Ansprüche 1,2; Beispiele 1, 4-7,9,11-14 * ---- | 1,2,3 | |

RECHERCHIERTE
SACHGEBIETE (Int. Cl.⁵)

C 25 B
C 09 C

Der vorliegende Recherchenbericht wurde für alle Patentansprüche erstellt.

| Recherchenort | Abschlußdatum der Recherche | Prüfer |
|---|---|---|
| WIEN | 08-08-1991 | LUX |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82